# EUROPÄISCHE PATENTSCHRIFT

(11) **EP 0 830 915 B1**
(45) Veröffentlichungstag und Bekanntmachung des Hinweises auf die Patenterteilung: **11.10.2000**
(21) Anmeldenummer: 97112683.4
(22) Anmeldetag: 24.07.1997
(51) Int. Cl.: B23K 11/30, B23K 11/11

(54) **Elektrode zum Widerstands-Punktschweissen von Aluminium-Blechen**
Electrode for resistance spot welding of aluminium sheets
Electrode pour le soudage résistif par points de tôles en aluminium

(30) Priorität: 13.09.1996 DE 19637410
(43) Veröffentlichungstag der Anmeldung: 25.03.1998
(73) Patentinhaber: Bayerische Motoren Werke Aktiengesellschaft, 80788 München (DE)
(72) Erfinder: Gschossmann, Nikolaus, 83236 Übersee (DE); Donath, Norbert, 82343 Pöcking (DE); Schubert, Franz, 85586 Poing (DE); Müller, Dietmar, 85716 Unterschleissheim (DE)

(56) Entgegenhaltungen:
- EP-A- 0 103 243
- PATENT ABSTRACTS OF JAPAN vol. 9, no. 279 (M-427), 7.November 1985 & JP 60 121083 A (TOYOTA CHUO KENKYUSHO K.K.), 26.Juni 1985,
- PATENT ABSTRACTS OF JAPAN vol. 9, no. 29 (M-356), 7.Februar 1985 & JP 59 174284 A (SUMITOMO KEIKINZOKU KOGYO K.K.), 2.Oktober 1984,

## Beschreibung

Die Erfindung betrifft eine Vorrichtung zum Widerstands-Punktschweißen von Blechen oder Profilen aus gut leitfähigem Material, insbesondere aus aus Aluminium, Magnesium oder Kupfer, mit einem zwischen einer Elektrodenkappe der Schweißelektrode sowie der Oberfläche des Profiles oder des Bleches, insbesondere des Aluminium-Bleches, vorgesehenen Folienabschnitt, der relativ zur Elektrodenkappe verschiebbar ist.
Unter den Begriff der Profile sollen dabei ausdrücklich die mittels Punktschweiß-Elektroden verschweißbaren Strangpreßprofile sowie filigran gegossene dünnwandige Bauteile aus den genannten Materialien fallen.

Werden gängige Aluminiumbleche verschweißt, so kann sich auf der Oberfläche dieser Bleche eine Oxidschicht befinden, es kann aber auch diese Oxidschicht beispielsweise durch Beizen oder Schleifen entfernt worden sein. Weiterhin sollen unter diesen Begriff der gängigen Aluminiumbleche auch solche mit üblichen Beschichtungen, beispielsweise mit einer Titan-Zirkon-Beschichtung fallen. Das Grundmaterial der Bleche kann dabei solches der 5er-Reihe oder der 6er-Reihe sein, d. h. es kann es sich um AlMg3 bis AlMg5 (internationale geläufige Bezeichnung: 5182) oder auch um AlMg0,4 Si 1, 2 (internationale geläufige Bezeichnung: 6016) handeln.

Neben Aluminium-Blechen, die sich bekanntermaßen durch eine relativ hohe elektrische Leitfähigkeit und gleichermaßen durch eine relativ hohe Wärmeleitfähigkeit auszeichnen, ist die Elektrode der vorliegenden Erfindung auch für das Verschweißen von Blechen oder insbesondere filigranen Profilen aus anderen Materialien, die sich ebenfalls durch relativ hohe Leitfähigkeiten auszeichnen, besonders gut geeignet. Neben aluminierten Stahlblechen können als Beispiele für derartige andere Materialien Kupfer, insbesondere silberbeschichtetes Kupfer, aber auch Magnesium angeführt werden. Auch auf den Oberflächen von im wesentlichen aus diesen Materialien gegossenen Profilen kann sich eine Gießhaut befinden, die jedoch bspw. durch Schleifen auch entfernt worden sein kann.

In der DE 44 16 504 A1 ist eine Elektrode nach dem Oberbegriff des Anspruchs 1 beschrieben. Der Folienabschnitt, der bevorzugt Bestandteil eines Folienbandes ist, schützt die Elektrode beim Schweißen von Aluminiumblechen vor Anlegierungen von Aluminium.
Wie bekannt ist beim Schweißen an der Kontaktfläche zwischen der Schweißelektrode und einem Aluminiumblech ein Herausspritzen von Materialschmelze zu beobachten, was zu einer Mischkristallbildung zwischen dem Kupferanteil der Schweißelektroden und dem Aluminium führt. Die Folge sind Ablagerungserscheinungen sowohl von Elektrodenwerkstoff auf der Blechoberfläche als auch von Blechwerkstoff auf der Elektrode, was als Anlegierung bezeichnet wird.

Eine derartige Anlegierung beim Schweißen von Aluminium-Blechen mit üblichen Elektrodenkappen aus Kupfer-Legierungen beschädigt bekanntermaßen die Elektrodenoberfläche, was eine Standzeitreduktion zur Folge hat und ferner zu einer nicht mehr ausreichenden Festigkeit des Schweißpunktes sowie zu einem Festkleben der Elektroden bis hin zu Beschädigungen an der Blechoberfläche führen kann.

Indem nun zwischen die Elektrodenkappe sowie die Blechoberfläche ein Folienabschnitt aus einem elektrisch und thermisch gut leitfähigen Material vorgesehen wird, der nach einem oder mehreren Schweißpunkten erneuert wird, können sich an der Elektrodenkappe keine Anlegierungen bilden, so daß deren Standzeit deutlich erhöht wird. Besonders einfach kann der Folilenabschnitt dabei erneuert werden, wenn - wie in der oben genannten Schrift beschrieben - dieser Folienabschnitt Bestandteil eines von einer Spule abwickelbaren Folienbandes ist, das beispielsweise zwischen zwei Spulen geführt und über die Elektrode gespannt ist und bei Verschleiß am an der Elektrodenkappe anliegenden Folienabschnitt taktweise weiterbefördert wird.

Allerdings wurde in Versuchen beim Verschweißen üblicher Aluminiumbleche bei Verwendung naheliegender und gängiger Materialien für das Folienband ein Verkleben entweder zwischen dem Folienabschnitt und der Elektrodenkappe oder auch zwischen dem Folienabschnitt und dem Aluminumblech beobachtet. Diese Klebeeffekte sind jedoch nachteilig, da sie entweder die Qualität des Schweißpunktes negativ beeinflussen oder im schlimmsten Falle einen Weitertransport des Folienbandes gegenüber der Elektrodenkappe überhaupt verhindern.
Im übrigen werden diese Klebeeffekte auch beim Verschweißen von Blechen oder insbesondere feingegossenen filigranen Profilen aus den weiteren o.g. Materialien beobachtet.

Aufgabe der vorliegenden Erfindung ist es daher, eine besonders günstige Lösung aufzuzeigen, mit Hilfe derer insbesondere gängige Aluminiumbleche, aber auch Bleche oder punktschweißbare Profile aus anderen besonders gut leitfähigen Materialien unter Zwischenlage eines Folienabschnittes, der bei Verschleißerscheinungen relativ zur Elektrodenkappe verschiebbar ist, widerstands-punktgeschweißt werden können.

Zur Lösung der gestellten Aufgabe wird bei einer gattungsgemäßen Vorrichtung vorgeschlagen, daß der Folienabschnitt aus einem Material mit hohem Nickel-Anteil besteht, und daß die im wesentlichen aus einer Kupferlegierung bestehende Elektrodenkappe mit Silber oder einem Silbermetalloxid beschichtet ist oder einen mit dem Folienabschnitt in Kontakt kommenenden Einsatz aus Silber oder aus einem Silbermetalloxid aufweist. Insbesondere kann die Elektrodenkappe hartversilbert sein.

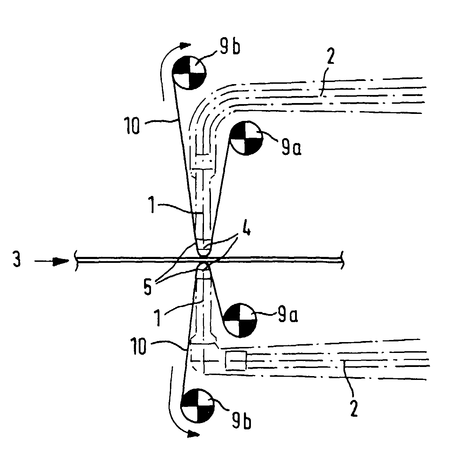

Zur näheren Erläuterung wird auf die beigefügte Figur verwiesen, die erfindungsgemäße Elektroden mit jeweils einem Folienband bzw. Folienabschnitt beim Verschweißen von Aluminiumblechen zeigt.

Dabei sind mit der Bezugsziffer 1 die beiden Elektroden einer Widerstands-Punktschweiß-Vorrichtung, bspw. Punktschweiß-Zange bezeichnet, die wie üblich an den beiden Pinolen 2 der nicht näher dargestellten Zange befestigt sind. Mit dieser Punktschweiß-Zange sollen zwei aufeinanderliegende Aluminium-Bleche 3 wie üblich miteinander verschweißt werden, d. h. im Schweißpunkt werden die beiden Aluminium-Bleche 3 durch die Elektroden 1 gegeneinandergepreßt, wobei punktweise zwischen den Elektroden über die Bleche 3 ein hoher Stromfluß stattfindet.

Um die Elektroden 1 bzw. die im Spitzenbereich vorgesehenen, an sich üblichen Elektrodenkappen 4 vor Oberflächenbeschädigungen zu schützen, ist jeder Elektrode 1 bzw. Elektrodenkappe 4 ein Folienabschnitt 5 zugeordnet, der insbesondere an der Spitze der Elektrodenkappe 4, aber auch an den einander gegenüberliegenden Seitenflächen der Elektrodenkappe 4 anliegt. Jeder Folienabschnitt 5 liegt somit zwischen der jeweiligen Elektrode 1 bzw. deren Elektrodenkappe 4 sowie den Blechen 3 und schützt die zugeordnete Elektrodenkappe 4 vor Beschädigungen, so insbesondere vor einer Anlegierung von Aluminium.

Jeder Folienabschnitt 5 ist Bestandteil eines von einer Spule 9a abwickelbaren Folienbandes 10, dessen anderes Ende auf einer Spule 9b aufgewickelt ist. Jede Spule 9b kann einen geeigneten Antriebsmechanismus aufweisen, der bei einem Verschleiß des aktuell an der Elektrodenkappe 4 anliegenden Folienabschnittes 5 das Folienband 10 zwischen zwei Schweißvorgängen um einen gewissen Betrag bzw. Weg weiterbefördert, so daß ein neuer Folienabschnitt 5 an der Elektrodenkappe 4 zum Anliegen kommt. Dieser beschriebene Weitertransport funktioniert jedoch nur dann zufriedenstellend, wenn der Folienabschnitt 5 während des Schweißens nicht mit der Elektrodenkappe 4 verklebt. Selbstverständlich sollten im Hinblick auf eine optimale Schweißpunktqualität auch zwischen dem Folienabschnitt 5 sowie den Blechen 3 keine Klebeeffekte auftreten.

Daher besteht der Folienabschnitt 5 aus einem Material mit hohem Nickel-Anteil, während in der Kontaktfläche zwischen der Elektrodenkappe 4 sowie dem Folienabschnitt Silber oder ein Silbermetalloxid als Material vorgesehen ist, wozu eine an sich übliche Elektrodenkappe aus einer geeigneten Kupfer-Legierung entweder mit Silber oder mit einem Silbermetalloxid beschichtet sein oder einen mit dem Folienabschnitt beim Schweißen in Kontakt kommenden Einsatz aus diesen Materialien aufweisen kann. Mit diesen Materialkombinationen, d. h. auf der dem Aluminiumblech 3 zugewandten Seite in Form von Aluminium und Nickel sowie auf der der Elektrodenkappe 4 zugewandten Seite in Form von Silber und Nickel, wurden in zahlreichen Versuchsreihen mit den unterschiedlichsten gängigen Aluminiumblechen 3 bis zu 10000 Schweißpunkte gesetzt und dabei stets optimale Schweißergebnisse erzielt, d. h. es wurden inbesondere keinerlei Klebeeffekte beobachtet.

In einem Vergleichsversuch mit einer blanken Kupferelektrode sowie mit einem einfachen Folienband, welches nicht erfindungsgemäß beschichtet war, konnten hingegen nur 800 beanstandungslose Schweißpunkte gesetzt werden. Ferner konnten in einem weiteren Vergleichsversuch mit blanker Kupferelektrode beim Schweißen von Aluminiumblechen, von denen die Oxidschicht entfernt wurde, ohne zwischengelegtes Folienband nur 300 Schweißpunkte gesetzt werden. Wurden schließlich Aluminiumbleche mit darauf befindlicher Oxidschicht verschweißt, so konnten ohne Folienband nur 40 Schweißpunkte beanstandungslos gesetzt werden.

Wie bereits erläutert, ist der Folienabschnitt 5 bevorzugt Bestandteil des Folienbandes 10, das aus Nickel oder einer geeigneten Nickel-Legierung gefertigt ist. Besonders geeignet für den geschilderten Zweck sind Nickel bzw. geeignete Nickel-Legierungen mit hohem Nickelanteil auch deshalb, da sich aus diesen Materialien besonders gut Folien bzw. Folienbänder 10 herstellen lassen. Als ein Beispiel für ein Material mit hohem Nickel-Anteil für das Folienband 10 kann eine Nickel-Legierung mit zumindest im wesentlichen 50 % Nickelanteil genannt werden, aber auch Constantan, d. h. CuNi 44, die ebenfalls einen ausreichend hohen Nickelanteil aufweist. Sowohl hiermit als auch unter Verwendung von reinem Nickel sind optimal geeignete Folienbänder 10 herstellbar, die bevorzugt eine Dicke im Bereich von 0,02 mm bis 0,05 mm aufweisen können.

Wie bereits erwähnt, sollen für die Elektrodenkappe gängige Materialien zum Einsatz kommen, so grundsätzlich Kupfer-Legierungen, beispielsweise Kupfer-Chrom-Zirkon, aber auch CuAg. Nur dann wurden jedoch zwischen dem Folienabschnitt 5 sowie der Elektrodenkappe 4 auch nach 10000 Schweißpunkten keine Klebeeffekte beobachtet, wenn in dieser Kontaktfläche zwischen der Elektrodenkappe 4 sowie dem Folienabschnitt 5 als Material Silber vorherrschte. Dies ist realisierbar, wenn entweder die Elektrodenkappe 4 auf der dem Folienabschnitt 5 zugewandten Oberfläche mit Silber oder einem Silbermetalloxid beschichtet ist oder einen geeigneten Einsatz aus diesen Materialien aufweist.

Als Silbermaterial kann dabei Reinsilber zum Einsatz kommen, welches aber für einige Anwendungsfälle zu weich sein kann. Dafür bieten sich dann geeignete Silbermetalloxide mit weiterhin hohem Silberanteil an. Derartige Silbermetalloxide sind aus der elektrischen Kontaktindustrie bekannt. Ferner besteht die Möglichkeit einer sog. Hartsilberbeschichtung, welche beispielsweise bei Eßbestecken zum Einsatz kommt.

Stets sollte darauf geachtet werden, daß ein möglichst geringer elektrischer Widerstand vorliegt, und daß insbesondere auch durch Oxidationsvorgänge, welche zumeist unvermeidbar sind, keine Widerstandserhöhung, welche eine Temperatursteigerung und somit die genannten Klebeeffekte zur Folge hätte, eintritt. Ferner sollte sich das zum Einsatz kommende Silbermaterial durch eine hohe Wärmeleitfähigkeit sowie durch ausreichende Wärmehärte auszeichnen. Dann sind optimale Schweißergebnisse erzielbar, wobei für eine deutlich geringere Anzahl von Schweißpunkten auch andere Materialkombinationen denkbar sind, während eine für die Großserienfertigung erfoderliche Schweißpunktzahl-Größe nur mit den genannten Materialkombinationen erzielt werden konnte. Erklärbar ist dies mit den unterschiedlichen metallurgischen und physikalischen Effekten, die in der Schweißzone während des Schweißvorganges aufgrund der extrem hohen Stromstärken, die dort übertragen werden, auftreten. Insofern war erfinderische Tätigkeit vonnöten, um unter Berücksichtigung des bekannten Standes der Technik zur vorgeschlagenen Vorrichtung zum Widerstands-Punktschweißen von Aluminium-Blechen 3 zu gelangen, mit der unter Serienbedingungen bei langer Standzeit optimale Schweißergebnisse erzielbar sind. Dabei hat sich gezeigt, daß vergleichbar gute Ergebnisse auch mit zu verschweißenden Blechen oder Profilen aus den anderen eingangs genannten Materialien erzielt werden können.

## Patentansprüche

1. Vorrichtung zum Widerstands-Punktschweißen von Blechen oder Profilen aus gut leitfähigem Material, insbesondere aus Aluminium oder aus Magnesium oder Kupfer,
mit einem zwischen einer Elektrodenkappe (4) der Schweißelektrode sowie der Oberfläche des Profiles oder des Bleches, insbesondere des Aluminium-Bleches (3) vorgesehenen Folienabschnitt (5),
der relativ zur Elektrodenkappe (4) verschiebbar ist,
dadurch gekennzeichnet, daß der Folienabschnitt (5) aus einem Material mit hohem Nickel-Anteil besteht, und daß die im wesentlichen aus einer Kupfer-Legierung bestehende Elektrodenkappe (4) mit Silber oder einem Silbermetalloxid beschichtet ist oder einen mit dem Folienabschnitt (5) in Kontakt kommenden Einsatz aus Silber oder einem Silbermetalloxid aufweist.

2. Vorrichtung nach Anspruch 1,
dadurch gekennzeichnet, daß der Folienabschnitt (5) zumindest 50% Nickelanteil enthält.

3. Vorrichtung nach Anspruch 1,
dadurch gekennzeichnet, daß der Folienabschnitt (5) aus Constantan besteht.

4. Vorrichtung nach Anspruch 1,
dadurch gekennzeichnet, daß der Folienabschnitt (5) Bestandteil eines Folienbandes (10) ist, welches eine Dicke im Bereich von 0,02 mm bis 0,05 mm aufweist.

## Claims

1. A device for resistance spot welding of sheets or profiles made of material which is a good conductor, especially aluminium or magnesium or copper,
comprising a foil portion (5) provided between a cap (4) of the welding electrode and the surface of the profile or sheet, especially the aluminium sheet (3), and movable relative to the electrode cap (4), characterised in that the foil portion (5) is made of a material having a high nickel content, and the electrode cap (4), comprising mainly of a copper alloy, is coated with silver or a silver metal oxide or has a silver or silver metal oxide insert which comes into contact with the foil portion (5).

2. A device according to claim 1,
characterised in that the foil portion (5) contains at least 50% nickel.

3. A device according to claim 1,
characterised in that the foil portion (5) is of constantan.

4. A device according to claim 1,
characterised in that the foil portion (5) is a part of a foil strip (10) having a thickness in the range from 0.02 to 0.05 mm.

## Revendications

1. Dispositif de soudage par points, résistif, pour des tôles ou des profilés en matière bonne conductrice, notamment en aluminium, en magnésium ou en cuivre, dans lequel, entre une tête d'électrode (4) de l'électrode de soudage et la surface du profilé ou de la tôle, notamment de la tôle d'aluminium (3), on a un segment de feuille (5) coulissant par rapport à la tête (4) de l'électrode,
caractérisé en ce que
- le segment de feuille (5) est en une matière à forte teneur en nickel et
- la tête d'électrode (4) essentiellement en alliage de cuivre est recouverte avec de l'argent ou un oxyde argent-métal, ou comprend un insert en argent ou en un oxyde argent-métal, arrivant en contact avec le segment de feuille (5).

2. Dispositif selon la revendication 1,
caractérisé en ce que
le segment de feuille (5) contient au moins 50 % de nickel.

3. Dispositif selon la revendication 1,
caractérisé en ce que
le segment de feuille (5) est en constantan.

4. Dispositif selon la revendication 1,
caractérisé en ce que
le segment de feuille (5) fait partie d'un ruban (10) d'une épaisseur de l'ordre de 0,02 mm à 0,05 mm.
